# EUROPÄISCHE PATENTSCHRIFT

(11) **EP 4 015 177 B1**
(45) Veröffentlichungstag und Bekanntmachung des Hinweises auf die Patenterteilung: **30.08.2023**
(21) Anmeldenummer: 20214537.1
(22) Anmeldetag: 16.12.2020
(51) Int. Cl.: B29B 7/80, B29B 7/60, B29B 7/48, B29B 7/82, B29C 48/27, B29C 48/285, B29C 48/50

(54) **BESCHICKUNGS-SCHNECKENMASCHINE ZUM BESCHICKEN EINER AUFBEREITUNGS-SCHNECKENMASCHINE, SOWIE DARAUF BEZOGENES VERFAHREN**
FEED SCREW-TYPE MACHINE FOR FEEDING A PROCESSING SCREW-TYPE MACHINE, AND RELATED METHOD
MACHINE À VIS DE CHARGEMENT PERMETTANT DE CHARGER UNE MACHINE À VIS DE TRAITEMENT, ET PROCÉDÉ ASSOCIÉ

(43) Veröffentlichungstag der Anmeldung: 22.06.2022
(73) Patentinhaber: Coperion GmbH, 70469 Stuttgart (DE)
(72) Erfinder: Stirner, Thorsten, 75203 Königsbach-Stein (DE)
(74) Vertreter: Rau, Schneck & Hübner Patentanwälte Rechtsanwälte PartGmbB

(56) Entgegenhaltungen:
- EP-A1- 2 946 904
- EP-A1- 3 175 967
- EP-A1- 3 284 566
- EP-B1- 0 231 034
- WO-A1-2016/198223
- CN-A- 109 732 872
- CN-U- 206 796 491
- CN-Y- 2 392 661

## Beschreibung

Die Erfindung betrifft eine Beschickungs-Schneckenmaschine zum Beschicken einer Aufbereitungs-Schneckenmaschine. Ferner betrifft die Erfindung eine Aufbereitungsanlage und ein Verfahren zum Betreiben einer Aufbereitungsanlage mit einer derartigen Beschickungs-Schneckenmaschine.

Aus der EP 3 175 967 A1 ist eine Aufbereitungsanlage zur Aufbereitung einer Styrol-Acrylnitril-Schmelze bekannt. Die Aufbereitungsanlage umfasst eine Beschickungs-Schneckenmaschine, die seitlich an eine Aufbereitungs-Schneckenmaschine angeschlossen ist. Mittels der Beschickungs-Schneckenmaschine wird Kautschuk in die Aufbereitungs-Schneckenmaschine zugeführt.

Aus der WO 2016/198 223 A1 ist eine Vorlagevorrichtung zum Beschicken eines Extruders bekannt. Die Vorlagevorrichtung umfasst einen Wägetrichter und eine Dosierschnecke zum Zuführen von Einsatzmaterial in den Extruder. Unterhalb des Wägetrichters weist die Vorlagevorrichtung eine Ablassöffnung auf, die mittels eines Ablassverschlusses geöffnet und verschlossen werden kann. Bei einer Reinigung der Vorlagevorrichtung wird die Dosierschnecke rückwärts betrieben, so dass das Einsatzmaterial über die geöffnete Ablassöffnung in einen Behälter oder eine Rückführvorrichtung abgeführt wird.

Aus der CN 206 796 491 U ist ein Extruder mit einer Extruderschnecke bekannt. An einer Kupplungsstelle der Extruderschnecke ist eine Gewindebuchse angeordnet, die im Vergleich zu der Extruderschnecke eine entgegengesetzte Gewinderichtung hat. Schmutz, der sich am Anfang der Extruderschnecke sammelt, wird mittels der Gewindebuchse zu einer Austragsöffnung gefördert und in einem Sammelbehälter aufgefangen.

Aus der EP 3 284 566 A1 ist eine Vorrichtung zur wahlweisen Herstellung einer gefärbten und einer ungefärbten Kunststoff-Schmelze bekannt. Mittels einer Beschickungs-Schneckenmaschine wird Farbmittel und ungefärbtes Kunststoffmaterial in eine Aufbereitungs-Schneckenmaschine zugeführt.

Aus der EP 2 946 904 A1, der CN 2 392 661 Y, der CN 109 732 872 A und der EP 0 23 1 034 B1 sind Aufbereitungs-Schneckenmaschinen zum Aufbereiten von Material bekannt.

Der Erfindung liegt die Aufgabe zugrunde, eine Beschickungs-Schneckenmaschine zum Beschicken einer Aufbereitungs-Schneckenmaschine zu schaffen, die eine einfache, schnelle und zuverlässige Reinigung ohne eine Beeinträchtigung des Beschickens ermöglicht.

Diese Aufgabe wird durch eine Beschickungs-Schneckenmaschine mit den Merkmalen des Anspruchs 1 gelöst. Dadurch, dass in dem Gehäuse der Beschickungs-Schneckenmaschine eine Entleeröffnung ausgebildet ist, ist eine Entleerung und Reinigung der Beschickungs-Schneckenmaschine unabhängig von der Aufbereitungs-Schneckenmaschine möglich. Die Entleeröffnung durchdringt das Gehäuse. Die Entleeröffnung verbindet die mindestens eine Gehäusebohrung mit der Umgebung. In der mindestens einen Gehäusebohrung befindliches Material und/oder in der mindestens einen Gehäusebohrung befindliches Reinigungsmittel kann zur Reinigung bzw. nach der Reinigung durch die Entleeröffnung aus der mindestens einen Gehäusebohrung abgeführt werden. Eine aufwendige Abführung von Material und/oder Reinigungsmittel über die Aufbereitungs-Schneckenmaschine ist somit nicht erforderlich.

Dadurch, dass die Entleeröffnung in der Förderrichtung stromaufwärts zu der Zuführöffnung angeordnet ist, wird eine einfache, schnelle und zuverlässige Reinigung gewährleistet. Die Entleeröffnung ist in der Förderrichtung stromaufwärts zu der Zuführöffnung und der Beschickungsöffnung angeordnet, so dass die Entleeröffnung nicht zwischen der Beschickungsöffnung und der Zuführöffnung angeordnet ist. Das Beschicken der Aufbereitungs-Schneckenmaschine kann somit durch die Entleeröffnung unter keinen Umständen beeinträchtigt werden. Zum Entleeren und/oder Reinigen wird die mindestens eine Förderschneckenwelle derart drehangetrieben, dass die Beschickungs-Schneckenmaschine in einer Entleerrichtung fördert, die entgegengesetzt zu der Förderrichtung gerichtet ist.

Vorzugsweise ist die Beschickungs-Schneckenmaschine als Seitenbeschickungs-Schneckenmaschine ausgebildet. Die Seitenbeschickungs-Schneckenmaschine ermöglicht einen seitlichen Anschluss an die Aufbereitungs-Schneckenmaschine.

Vorzugsweise sind in dem Gehäuse mindestens zwei einander durchdringende Gehäusebohrungen ausgebildet. Die mindestens zwei Gehäusebohrungen haben insbesondere im Querschnitt die Form einer liegenden Acht. Vorzugsweise hat die Beschickungsöffnung im Querschnitt die Form einer liegenden Acht. In den mindestens zwei Gehäusebohrungen sind insbesondere mindestens zwei zugehörige Förderschneckenwellen drehbar angeordnet. Die mindestens zwei Förderschneckenwellen sind insbesondere gleichsinnig drehantreibbar und/oder dicht kämmend ausgebildet.

Die Beschickungs-Schneckenmaschine umfasst mindestens eine in dem Gehäuse ausgebildete Zuführöffnung zum Zuführen von Material. Die Beschickungs-Schneckenmaschine kann beispielsweise mehrere Zuführöffnungen zum Zuführen von Materialkomponenten des Materials in die mindestens eine Gehäusebohrung aufweisen. Merkmale betreffend die Zuführöffnung gelten insbesondere für die jeweilige Zuführöffnung.

Eine Beschickungs-Schneckenmaschine nach Anspruch 2 gewährleistet eine einfache, schnelle und zuverlässige Reinigung. Durch die Anordnung der Entleeröffnung wird gewährleistet, dass kein Material und/oder kein Reinigungsmittel durch die Aufbereitungs-Schneckenmaschine abgeführt werden muss. In einem ersten Ausführungsbeispiel ist die Entleeröffnung zwischen der Zuführöffnung und der Beschickungsöffnung möglichst nahe an der Beschickungsöffnung angeordnet, so dass in der Beschickungs-Schneckenmaschine befindliches Material und/oder Reinigungsmittel vor dem Zuführen in die Aufbereitungs-Schneckenmaschine durch die Entleeröffnung abgeführt wird. In einem zweiten Ausführungsbeispiel ist die Entleeröffnung in der Förderrichtung stromaufwärts zu der Beschickungsöffnung und der Zuführöffnung angeordnet.

Eine Beschickungs-Schneckenmaschine nach Anspruch 3 gewährleistet eine einfache, schnelle und zuverlässige Reinigung. Dadurch, dass die Entleeröffnung an einer Unterseite des Gehäuses ausgebildet ist, ist das Entleeren von Material und/oder Reinigungsmittel gravitationsunterstützt möglich. Aufgrund der Gravitationskraft wird das zu entleerende Material und/oder Reinigungsmittel durch die Entleeröffnung aus dem Gehäuse abgeführt.

Eine Beschickungs-Schneckenmaschine nach Anspruch 4 gewährleistet eine einfache, schnelle und zuverlässige Reinigung. Das Verschlusselement ermöglicht ein bedarfsgerechtes Öffnen und Verschließen der Entleeröffnung. Das Verschlusselement ermöglicht insbesondere ein dichtes Verschließen der Entleeröffnung, so dass Reinigungsmittel bzw. flüssiges Reinigungsmittel nicht durch die Entleeröffnung austreten kann. Im verschlossenen Zustand der Entleeröffnung kann die Beschickungs-Schneckenmaschine beispielsweise durch ein alternierendes Fördern von Reinigungsmittel in der Förderrichtung und einer entgegengesetzten Entleerrichtung äußerst gründlich gereinigt werden. Zum Entleeren der abgereinigten Verschmutzungen und des Reinigungsmittels kann anschließend die Entleeröffnung durch Öffnen des Verschlusselements freigegeben und das Reinigungsmittel mit den Verschmutzungen abgeführt werden.

Eine Beschickungs-Schneckenmaschine nach Anspruch 5 gewährleistet eine einfache, schnelle und zuverlässige Reinigung. Dadurch, dass der Antriebsmotor ein Drehantreiben der mindestens einen Förderschneckenwelle in entgegengesetzten Drehrichtungen ermöglicht, ist eine besonders gründliche Reinigung möglich. In der ersten Drehrichtung fördert die mindestens eine Förderschneckenwelle in der Förderrichtung, wohingegen die mindestens eine Förderschneckenwelle in der zweiten Drehrichtung in eine entgegengesetzte Entleerrichtung fördert. Durch einen alternierenden Wechsel der Drehrichtungen kann Reinigungsmittel alternierend in der Förderrichtung und der Entleerrichtung gefördert werden, so dass die mindestens eine Förderschneckenwelle und/oder eine Gehäuseinnenwand des Gehäuses durch ein alternierendes Fördern des Reinigungsmittels intensiv gereinigt wird. Der Antriebsmotor ist insbesondere als elektrischer Antriebsmotor ausgebildet. Der Antriebsmotor umfasst insbesondere eine Motorsteuerung zum Einstellen zweier entgegengesetzter Motordrehrichtungen.

Eine Beschickungs-Schneckenmaschine nach Anspruch 6 gewährleistet eine einfache, schnelle und zuverlässige Reinigung. Die mindestens eine Hilfsöffnung ermöglicht in flexibler Weise das Zuführen von Reinigungsmittel in das Gehäuse bzw. in die mindestens eine Gehäusebohrung. Das Reinigungsmittel ist beispielsweise fest und/oder flüssig ausgebildet. Das Reinigungsmittel umfasst beispielsweise ein Reinigungsgranulat und/oder eine Reinigungsflüssigkeit. Ferner ermöglicht die mindestens eine Hilfsöffnung ein Zuführen und/oder Abführen eines Trocknungsmittels, beispielsweise eines Trocknungsfluids bzw. eines Heizfluids. Die mindestens eine Hilfsöffnung ist vorzugsweise an einer Oberseite des Gehäuses ausgebildet. Die mindestens eine Hilfsöffnung ist vorzugsweise in der Förderrichtung versetzt zu der Entleeröffnung und/oder der Zuführöffnung und/oder der Beschickungsöffnung ausgebildet. Beispielsweise ist mindestens eine Hilfsöffnung zwischen der Beschickungsöffnung und der Zuführöffnung und/oder zwischen der Zuführöffnung und der Entleeröffnung und/oder in der Förderrichtung stromaufwärts der Entleeröffnung ausgebildet.

Eine Beschickungs-Schneckenmaschine nach Anspruch 7 gewährleistet eine einfache, schnelle und zuverlässige Reinigung. Die Trocknungseinrichtung ermöglicht ein Trocknen der mindestens einen Förderschneckenwelle und/oder einer Gehäuseinnenwand des Gehäuses nach einer Nass-Reinigung. Hierdurch kann die Beschickungs-Schneckenmaschine in einfacher und schneller Weise wieder in Betrieb genommen werden, so dass die Aufbereitung von Material mittels der Aufbereitungs-Schneckenmaschine schnell fortgesetzt werden kann. Die Trocknungseinrichtung ist insbesondere in das Gehäuse integriert und/oder in Fluidverbindung mit dem Gehäuse und/oder der mindestens einen Gehäusebohrung.

Eine Beschickungs-Schneckenmaschine nach Anspruch 8 gewährleistet eine einfache, schnelle und zuverlässige Reinigung. Die Gehäuseheizung ermöglicht ein einfaches und schnelles Trocknen einer Gehäuseinnenwand des Gehäuses und/oder der mindestens einen Förderschneckenwelle. Die Gehäuseheizung umfasst insbesondere elektrische Heizelemente. Die elektrischen Heizelemente sind beispielsweise als Widerstandsheizpatronen ausgebildet. Die elektrischen Heizelemente sind insbesondere in Gehäuseausnehmungen des Gehäuses angeordnet. Die Gehäuseheizung umfasst vorzugsweise mindestens einen Fluidkanal, der in dem Gehäuse ausgebildet ist. Die Gehäuseheizung umfasst vorzugsweise mindestens einen Fluidkanal, der von einem Heizfluid durchströmbar ist. Das Heizfluid wird vorzugsweise von einem Fluidstromerzeuger bereitgestellt, der an den mindestens einen Fluidkanal angeschlossen ist.

Eine Beschickungs-Schneckenmaschine nach Anspruch 9 gewährleistet eine einfache, schnelle und zuverlässige Reinigung. Der Fluidstromerzeuger erzeugt zum Trocknen der mindestens einen Förderschneckenwelle und/oder einer Gehäuseinnenwand des Gehäuses ein strömendes Fluid. Das Fluid hat insbesondere eine im Vergleich zur Umgebungstemperatur erhöhte Temperatur. Das Fluid ist eine Flüssigkeit und/oder ein Gas. Der Fluidstromerzeuger ist beispielsweise in Verbindung mit mindestens einem Fluidkanal, der in dem Gehäuse ausgebildet ist. Das durch den mindestens einen Fluidkanal strömende Fluid erhitzt somit das Gehäuse zur Trocknung. Der Fluidstromerzeuger ist beispielsweise eine Pumpe. Der Fluidstromerzeuger ist insbesondere in Verbindung mit der mindestens einen Gehäusebohrung. Beispielsweise ist der Fluidstromerzeuger an mindestens eine Hilfsöffnung des Gehäuses angeschlossen. Ein Gas, beispielsweise Luft, wird mittels des Fluidstromerzeugers durch die mindestens eine Gehäusebohrung geführt, wodurch die mindestens eine Förderschneckenwelle und/oder die Gehäuseinnenwand getrocknet wird. Das Gas bzw. die Luft ist insbesondere erhitzt. Der Fluidstromerzeuger ist beispielsweise als Druckgasquelle ausgebildet. Der Fluidstromerzeuger dient insbesondere zum Ausblasen der Zuführöffnung und eines in die Zuführöffnung mündenden Einlauftrichters.

Der Erfindung liegt ferner die Aufgabe zugrunde eine Aufbereitungsanlage zu schaffen, die eine einfache, schnelle und zuverlässige Reinigung ermöglicht. Die Aufbereitungsanlage soll insbesondere mit einer geringen Stillstandzeit reinigbar sein.

Diese Aufgabe wird durch eine Aufbereitungsanlage mit den Merkmalen des Anspruchs 10 gelöst. Die Vorteile der erfindungsgemäßen Aufbereitungsanlage entsprechen den bereits beschriebenen Vorteilen der erfindungsgemäßen Beschickungs-Schneckenmaschine. Die Aufbereitungsanlage wird erfindungsgemäss mit mindestens einem Merkmal, das im Zusammenhang mit den Ansprüchen 1 bis 9 beschrieben wurde, weitergebildet.

Dadurch, dass die Aufbereitungs-Schneckenmaschine und die Beschickungs-Schneckenmaschine unabhängig voneinander gereinigt werden können, kann die Aufbereitungs-Schneckenmaschine und/oder die Beschickungs-Schneckenmaschine bedarfsgerecht und zeitoptimiert gereinigt werden. Insbesondere muss die Beschickungs-Schneckenmaschine zur Entleerung und/oder Reinigung nicht von der Aufbereitungs-Schneckenmaschine abgekoppelt bzw. gelöst werden. Die Beschickungs-Schneckenmaschine ist während der Entleerung und/oder Reinigung fest mit der Aufbereitungs-Schneckenmaschine verbunden. Die Beschickungs-Schneckenmaschine ist vorzugsweise als Seitenbeschickungs-Schneckenmaschine ausgebildet, die seitlich an die Aufbereitungs-Schneckenmaschine angeschlossen ist.

Die Aufbereitungs-Schneckenmaschine ist vorzugsweise als Mehrwellen-schneckenmaschine ausgebildet. Die Aufbereitungs-Schneckenmaschine umfasst ein Gehäuse mit mindestens einer Gehäusebohrung. In der mindestens einen Gehäusebohrung ist eine zugehörige Behandlungselementwelle zum Aufbereiten des zugeführten Materials drehbar angeordnet. Vorzugsweise sind in dem Gehäuse mindestens zwei Gehäusebohrungen ausgebildet, die einander durchdringen und im Querschnitt die Form einer liegenden Acht haben. Die mindestens zwei zugehörigen Behandlungselementwellen sind drehbar in den mindestens zwei Gehäusebohrungen angeordnet und vorzugsweise in gleichen Drehrichtungen drehantreibbar. Die mindestens zwei Behandlungselementwellen sind vorzugsweise einander dicht kämmend ausgebildet. In dem Gehäuse ist eine Materialzuführöffnung ausgebildet, die in Verbindung mit der Beschickungsöffnung der Beschickungs-Schneckenmaschine ist. Die Materialzuführöffnung wird von der Beschickungs-Schneckenmaschine mit dem aufzubereitenden Material beschickt. Vorzugsweise ist die Materialzuführöffnung der Aufbereitungs-Schneckenmaschine seitlich ausgebildet. Die Materialzuführöffnung entspricht im Querschnitt der Beschickungsöffnung.

Eine Aufbereitungsanlage nach Anspruch 11 gewährleistet eine einfache, schnelle und zuverlässige Reinigung. Mittels der Steuereinrichtung sind ein Betriebsmodus und ein Reinigungsmodus der Aufbereitungsanlage, insbesondere der Aufbereitungs-Schneckenmaschine und/oder der Beschickungs-Schneckenmaschine, einstellbar. In dem Betriebsmodus beschickt die Beschickungs-Schneckenmaschine die Aufbereitungs-Schneckenmaschine mit aufzubereitendem Material. Erforderlichenfalls wird der Aufbereitungs-Schneckenmaschine an anderen Zuführstellen weiteres Material und/oder mindestens ein Additiv zugeführt. In der Aufbereitungs-Schneckenmaschine folgt die Aufbereitung des Materials. In dem Reinigungsmodus wird die Aufbereitungs-Schneckenmaschine und/oder die Beschickungs-Schneckenmaschine entleert und/oder gereinigt. Vorzugsweise wird in dem Reinigungsmodus in der Beschickungs-Schneckenmaschine befindliches Material durch die Entleeröffnung abgeführt, ohne dass dieses Material in die Aufbereitungs-Schneckenmaschine gelangt. Vorzugsweise fördert die Beschickungs-Schneckenmaschine in dem Reinigungsmodus zumindest zeitweise das Material in einer Entleerrichtung, die der Förderrichtung entgegengesetzt ist. Hierzu wirkt die Steuereinrichtung mit einer Motorsteuerung eines Antriebsmotors der Beschickungs-Schneckenmaschine zusammen. Der Reinigungsmodus umfasst insbesondere ein Reinigen und/oder Trocknen der mindestens einen Förderschneckenwelle und/oder einer Gehäuseinnenwand des Gehäuses der Beschickungs-Schneckenmaschine.

Der Erfindung liegt ferner die Aufgabe zugrunde, ein Verfahren zum Betreiben einer Aufbereitungsanlage zu schaffen, das eine einfache, schnelle und zuverlässige Reinigung einer Beschickungs-Schneckenmaschine ohne eine Beeinträchtigung des Beschickens ermöglicht.

Diese Aufgabe wird durch ein Verfahren mit den Merkmalen des Anspruchs 12 gelöst. Die Vorteile des erfindungsgemäßen Verfahrens entsprechen den bereits beschriebenen Vorteilen der erfindungsgemäßen Beschickungs-Schneckenmaschine und der erfindungsgemäßen Aufbereitungsanlage. Das erfindungsgemäße Verfahren wird mit mindestens einem Merkmal präzisiert, das im Zusammenhang mit den Ansprüchen 1 bis 11 beschrieben wurde.

Die Aufbereitungsanlage wird in einem Betriebsmodus betrieben. In dem Betriebsmodus wird mittels der Beschickungs-Schneckenmaschine aufzubereitendes Material in der Förderrichtung gefördert und in die Aufbereitungs-Schneckenmaschine zugeführt. In dem Reinigungsmodus können die Aufbereitungs-Schneckenmaschine und die Beschickungs-Schneckenmaschine unabhängig voneinander entleert und/oder gereinigt werden. Durch die Entleeröffnung wird in der Beschickungs-Schneckenmaschine befindliches Material aus der mindestens einen Gehäusebohrung abgeführt und die Beschickungs-Schneckenmaschine auf diese Weise entleert. Das in der Beschickungs-Schneckenmaschine befindliche Material gelangt in dem Reinigungsmodus somit nicht in die Aufbereitungs-Schneckenmaschine. Reinigungsmittel, das zum Reinigen in die Beschickungs-Schneckenmaschine zugeführt wurde, kann durch die Entleeröffnung wieder abgeführt werden. Ein Abführen von Reinigungsmittel durch die Aufbereitungs-Schneckenmaschine ist nicht erforderlich. Im Reinigungsmodus ist die Beschickungs-Schneckenmaschine somit nicht von der Aufbereitungs-Schneckenmaschine getrennt, sondern fest mit dieser verbunden. Vorzugsweise ist die Aufbereitungs-Schneckenmaschine im Reinigungsmodus zumindest zeitweise im Stillstand.

Ein Verfahren nach Anspruch 13 gewährleistet eine einfache, schnelle und zuverlässige Reinigung. In dem Betriebsmodus wird die mindestens eine Förderschneckenwelle in einer ersten Drehrichtung drehangetrieben, so dass das Material in der Förderrichtung in die Aufbereitungs-Schneckenmaschine zugeführt wird. In dem Reinigungsmodus wird die mindestens eine Förderschneckenwelle zumindest zeitweise in einer zweiten Drehrichtung drehangetrieben, die umgekehrt zu der ersten Drehrichtung ist. Hierdurch wird das Material in einer Entleerrichtung gefördert, die der Förderrichtung entgegengesetzt ist. Durch das Fördern in der Entleerrichtung wird zuverlässig gewährleistet, dass kein Material in dem Reinigungsmodus in die Aufbereitungs-Schneckenmaschine gelangt. Insbesondere wird gewährleistet, dass das Material durch die Entleeröffnung abgeführt wird. Vorzugsweise wird die mindestens eine Förderschneckenwelle in dem Reinigungsmodus alternierend in der ersten Drehrichtung und der zweiten Drehrichtung drehangetrieben. Hierdurch kann ein Reinigungsmittel zwischen der Beschickungsöffnung und der Entleeröffnung abwechselnd in der Förderrichtung und in der Entleerrichtung gefördert werden, so dass das Reinigungsmittel die mindestens eine Förderschneckenwelle und/oder eine Gehäuseinnenwand des Gehäuses mehrfach reinigt.

Ein Verfahren nach Anspruch 14 gewährleistet eine einfache, schnelle und zuverlässige Reinigung. Durch das Trocknen des Gehäuses bzw. einer Gehäuseinnenwand des Gehäuses und/oder der mindestens einen Förderschneckenwelle werden eine kurze Stillstandzeit der Aufbereitungsanlage und eine schnelle Wiederinbetriebnahme nach einer Nass-Reinigung ermöglicht. Das Trocknen erfolgt mittels einer Trocknungseinrichtung. Die Trocknungseinrichtung umfasst insbesondere eine Gehäuseheizung und/oder einen Fluidstromerzeuger.

Weitere Merkmale, Vorteile und Einzelheiten der Erfindung ergeben sich aus der nachfolgenden Beschreibung mehrerer Ausführungsbeispiele. Es zeigen:
- Fig. 1: eine teilweise geschnitten dargestellte Aufbereitungsanlage zur Herstellung einer Pulverlackschmelze mit einer Aufbereitungs-Schneckenmaschine und einer Beschickungs-Schneckenmaschine gemäß einem ersten Ausführungsbeispiel,
- Fig. 2: eine teilweise geschnittene Draufsicht auf die Aufbereitungsanlage in Fig. 1,
- Fig. 3: eine teilweise geschnittene Seitenansicht der Beschickungs-Schneckenmaschine in Fig. 2, und
- Fig. 4: eine teilweise geschnittene Darstellung einer Beschickungs-Schneckenmaschine gemäß einem zweiten Ausführungsbeispiel.

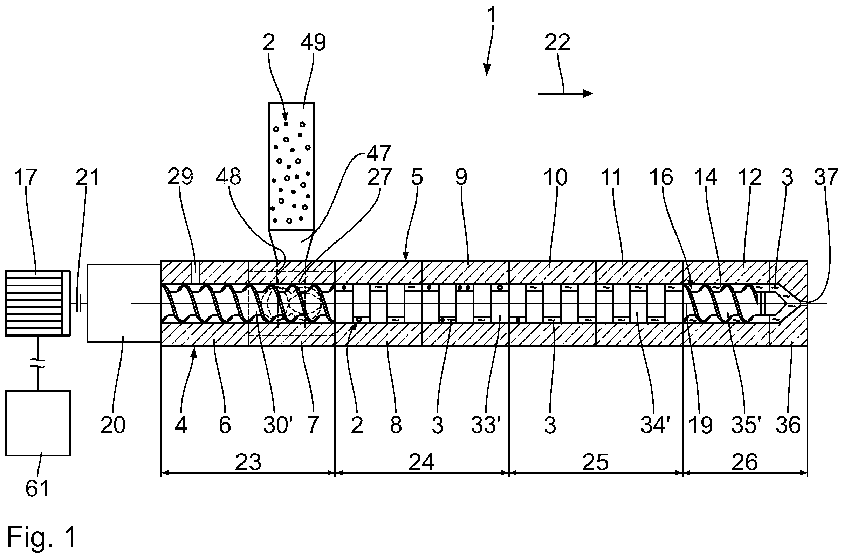

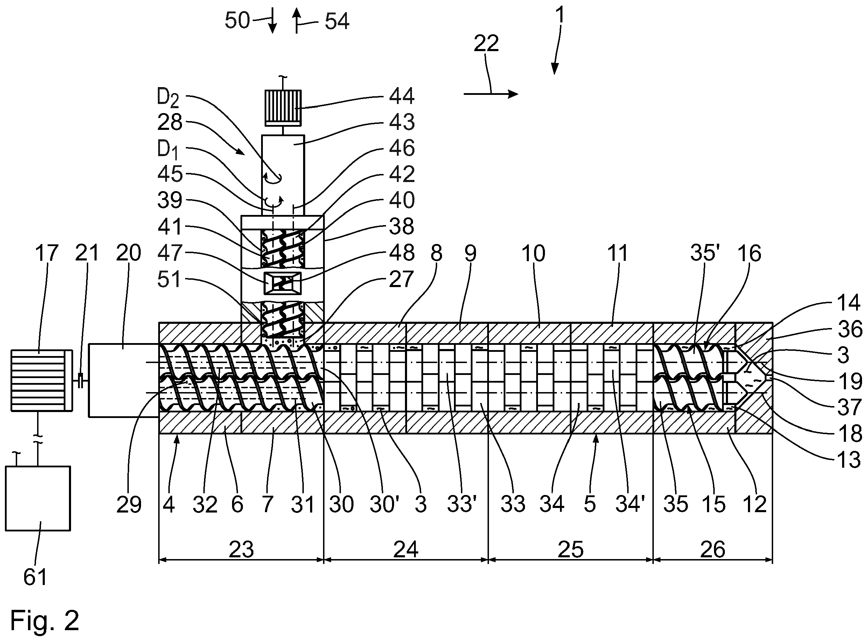

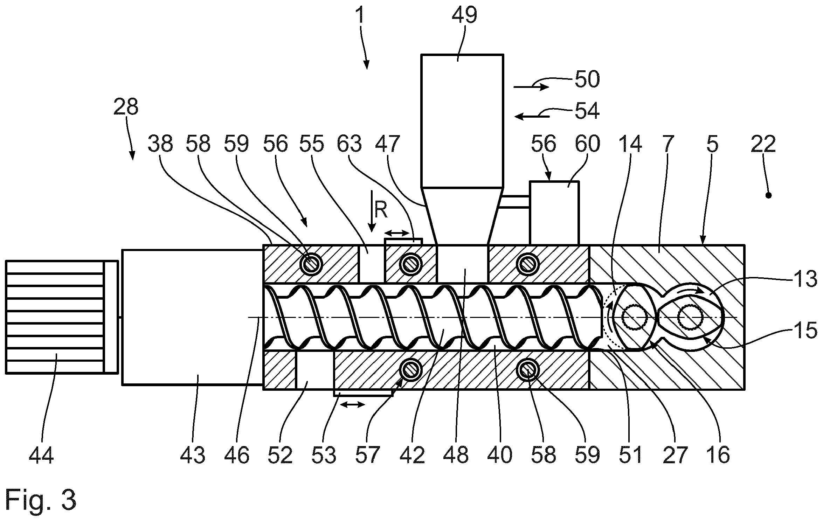

Nachfolgend ist anhand der Figuren 1 bis 3 ein erstes Ausführungsbeispiel der Erfindung beschrieben. Die in den Figuren dargestellte Aufbereitungsanlage 1 dient zur Aufbereitung einer Pulverlackvormischung 2 zu einer Pulverlackschmelze 3. Die Pulverlackvormischung 2 stellt somit ein aufzubereitendes Material dar.

Die Aufbereitungsanlage 1 umfasst eine Aufbereitungs-Schneckenmaschine 4, die ein Gehäuse 5 aus mehreren nacheinander angeordneten Gehäuseabschnitten 6 bis 12 aufweist. Die Gehäuseabschnitte 6 bis 12 sind zur Ausbildung des Gehäuses 5 miteinander verbunden. Die Aufbereitungs-Schneckenmaschine 4 ist als Mehrwellen-Schneckenmaschine ausgebildet. In dem Gehäuse 5 sind zwei zueinander parallele und einander durchdringende Gehäusebohrungen 13, 14 ausgebildet, die im Querschnitt die Form einer liegenden Acht haben. In den Gehäusebohrungen 13, 14 sind konzentrisch zwei Behandlungselementwellen 15, 16 angeordnet, die von einem Antriebsmotor 17 um zugehörige Drehachsen 18, 19 drehantreibbar sind. Zwischen den Behandlungselementwellen 15, 16 und dem Antriebsmotor 17 ist ein Verzweigungsgetriebe 20 angeordnet. Zwischen dem Antriebsmotor 17 und dem Verzweigungsgetriebe 20 ist wiederum eine Kupplung 21 angeordnet. Die Behandlungselementwellen 15, 16 werden mittels des Antriebsmotors 17 gleichsinnig, also in gleichen Drehrichtungen um die Drehachsen 18, 19 drehangetrieben.

Die Aufbereitungs-Schneckenmaschine 4 weist in einer Aufbereitungsrichtung 22 nacheinander eine Einzugszone 23, eine Plastifizierzone 24, eine Homogenisierungszone 25 und eine Austragszone 26 auf.

In der Einzugszone 23 wird der Aufbereitungs-Schneckenmaschine 4 das aufzubereitende Material in Form der Pulverlackvormischung 2 zugeführt. Hierzu ist in dem Gehäuseabschnitt 7 eine Materialzuführöffnung 27 ausgebildet. Die Materialzuführöffnung 27 erstreckt sich seitlich durch den Gehäuseabschnitt 7 und mündet in die Gehäusebohrung 14.

Zum Beschicken der Aufbereitungs-Schneckenmaschine 4 mit dem Material umfasst die Aufbereitungsanlage 1 eine Beschickungs-Schneckenmaschine 28. Die Beschickungs-Schneckenmaschine 28 ist als Seitenbeschickungs-Schneckenmaschine ausgebildet. Die Beschickungs-Schneckenmaschine 28 ist seitlich an den Gehäuseabschnitt 7 angeschlossen bzw. daran befestigt.

In der Einzugszone 23 wird die Pulverlackvormischung 2 zu der Plastifizierzone 24 gefördert. In der Pulverlackvormischung 2 enthaltene Luft wird durch eine Entlüftungsöffnung 29 abgeführt. Die Entlüftungsöffnung 29 ist in dem Gehäuseabschnitt 6 ausgebildet. Die Behandlungselementwellen 15, 16 umfassen in der Einzugszone 23 Schneckenelemente 30, 30', die drehfest auf zugehörigen Wellen 31, 32 angeordnet sind und zum Fördern der Pulverlackvormischung 2 dienen.

In der Plastifizierzone 24 wird die zugeführte Pulverlackvormischung 2 aufgeschmolzen. Zum Aufschmelzen sind in der Plastifizierzone 24 auf den Wellen 31, 32 Knetelemente 33, 33' drehfest angeordnet. Die Knetelemente 33, 33' sind als Knetscheiben ausgebildet. Vorzugsweise sind in der Plastifizierzone 24 Knetblöcke auf den Wellen 31, 32 angeordnet, die mehrere einteilig miteinander ausgebildete Knetscheiben umfassen.

Die in der Plastifizierzone 24 plastifizierte bzw. aufgeschmolzene Pulverlackvormischung 2 wird zu der Homogenisierungszone 25 gefördert. In der Homogenisierungszone 25 wird die aufgeschmolzene Pulverlackvormischung 2 bzw. die Pulverlackschmelze 3 homogenisiert. In der Homogenisierungszone 25 sind auf den Wellen 31, 32 Knetelemente 34, 34' drehfest angeordnet. Die Knetelemente 34, 34' sind insbesondere als Knetscheiben ausgebildet. Vorzugsweise sind in der Homogenisierungszone 25 Knetblöcke angeordnet, die aus mehreren einteilig miteinander verbundenen Knetscheiben ausgebildet sind.

In der Austragszone 26 wird die Pulverlackschmelze 3 ausgetragen. In der Austragszone 26 sind auf den Wellen 31, 32 Schneckenelemente 35, 35' drehfest angeordnet, um die Pulverlackschmelze 3 zu fördern. An dem letzten Gehäuseabschnitt 12 ist eine Düsenplatte 36 angeordnet, die eine Austragsöffnung 37 ausbildet.

Nach dem Austragen der Pulverlackschmelze 3 wird diese in üblicher Weise gekühlt. Die gekühlte und erstarrte Pulverlackschmelze 3 wird anschließend zu Pulverlackpulver vermahlen.

Die Beschickungs-Schneckenmaschine 28 ist als zweiwellige Seitenbeschickungs-Schneckenmaschine ausgebildet. Die Beschickungs-Schneckenmaschine 28 umfasst ein Gehäuse 38 mit darin ausgebildeten Gehäusebohrungen 39, 40, die einander durchdringen und im Querschnitt die Form einer liegenden Acht haben. In den Gehäusebohrungen 39, 40 sind zwei Förderschneckenwellen 41, 42 konzentrisch angeordnet, die über ein Verzweigungsgetriebe 43 mittels eines Antriebsmotors 44 um zugehörige Drehachsen 45, 46 gleichsinnig drehantreibbar sind.

Die Beschickungs-Schneckenmaschine 28 umfasst einen Einlauftrichter 47, der in eine Zuführöffnung 48 mündet. Die Zuführöffnung 48 ist an einer Oberseite in dem Gehäuse 38 ausgebildet und mündet in die Gehäusebohrungen 39, 40. Das Material bzw. die Pulverlackvormischung 2 wird durch die Zuführöffnung 48 in die Gehäusebohrungen 39, 40 zugeführt. Eine Dosiereinrichtung 49 dosiert das Material bzw. die Pulverlackvormischung 2 in den Einlauftrichter 47. In dem Einlauftrichter 47 kann ein Rührwerk angeordnet sein.

In einer ersten Drehrichtung Di fördern die Förderschneckenwellen 41, 42 das Material in einer Förderrichtung 50 von der Zuführöffnung 48 zu einer Beschickungsöffnung 51. Die Beschickungsöffnung 51 ist an einem der Aufbereitungs-Schneckenmaschine 4 zugewandten Ende des Gehäuses 38 ausgebildet. Die Beschickungsöffnung 51 ist deckungsgleich zu der Materialzuführöffnung 27 ausgebildet und angeordnet. Die Förderschneckenwellen 41, 42 erstrecken sich über die Beschickungsöffnung 51 hinaus und münden in die Materialzuführöffnung 27. Die Beschickungsöffnung 51 dient somit zum Beschicken der Aufbereitungs-Schneckenmaschine 4 mit dem Material bzw. der Pulverlackvormischung 2.

Die Beschickungs-Schneckenmaschine 28 umfasst eine Entleeröffnung 52. Die Entleeröffnung 52 ist an einer Unterseite des Gehäuses 38 ausgebildet. Die Entleeröffnung 52 mündet in die Gehäusebohrungen 39, 40 und verbindet die Gehäusebohrungen 39, 40 mit der Umgebung. Die Entleeröffnung 52 ist in der Förderrichtung 50 stromaufwärts zu der Beschickungsöffnung 51 und der Zuführöffnung 48 angeordnet. Die Entleeröffnung 52 ist somit zwischen der Zuführöffnung 48 und einem dem Verzweigungsgetriebe 43 zugewandten Ende des Gehäuses 38 angeordnet.

Zum Öffnen und Verschließen der Entleeröffnung 52 umfasst die Beschickungs-Schneckenmaschine 28 ein Verschlusselement 53. Das Verschlusselement 53 ist an dem Gehäuse 38 angeordnet. Das Verschlusselement 53 ist relativ zu dem Gehäuse 38 verlagerbar, beispielsweise linear verschiebbar und/oder verschwenkbar. Das Verschlusselement 53 ist manuell betätigbar und/oder mittels eines nicht näher dargestellten Antriebs betätigbar.

Zum Entleeren der Beschickungs-Schneckenmaschine 28 sind die Förderschneckenwellen 41, 42 mittels des Antriebsmotors 44 in einer zweiten Drehrichtung D₂ drehantreibbar, die der ersten Drehrichtung Di entgegengesetzt ist. Beim Drehantreiben der Förderschneckenwellen 41, 42 in der zweiten Drehrichtung D₂ fördert die Beschickungs-Schneckenmaschine 28 das Material bzw. die Pulverlackvormischung 2 in einer Entleerrichtung 54, die der Förderrichtung 50 entgegengesetzt ist.

Zum Zuführen eines Reinigungsmittels R weist die Beschickungs-Schneckenmaschine 28 eine Hilfsöffnung 55 auf. Die Hilfsöffnung 55 ist an einer Oberseite des Gehäuses 38 ausgebildet. Die Hilfsöffnung 55 ist in der Förderrichtung 50 versetzt zu der Entleeröffnung 52 angeordnet. Die Hilfsöffnung 55 ist beispielsweise zwischen der Zuführöffnung 48 und der Entleeröffnung 52 angeordnet. Alternativ oder zusätzlich kann eine Hilfsöffnung zwischen der Zuführöffnung 48 und der Beschickungsöffnung 51 angeordnet sein. Zum Öffnen und Verschließen der Hilfsöffnung 55 umfasst die Beschickungs-Schneckenmaschine 28 ein Verschlusselement 63. Das Verschlusselement 63 ist verlagerbar an dem Gehäuse 38 angeordnet.

Die Beschickungs-Schneckenmaschine 28 umfasst eine Trocknungseinrichtung 56 zum Trocknen einer Gehäuseinnenwand des Gehäuses 38 und der Förderschneckenwellen 41, 42 nach einer Nass-Reinigung. Die Trocknungseinrichtung 56 umfasst eine Gehäuseheizung 57 mit mehreren elektrischen Heizelementen 58, die in zugehörigen Gehäuseausnehmungen 59 angeordnet sind. Die Heizelemente 58 sind beispielsweise als Widerstandsheizpatronen ausgebildet.

Zum Reinigen des Einlauftrichters 47 und der Zuführöffnung 48 umfasst die Beschickungs-Schneckenmaschine 28 einen Fluidstromerzeuger 60. Der Fluidstromerzeuger 60 ist als Druckgaserzeuger ausgebildet. Der Fluidstromerzeuger 60 ist an den Einlauftrichter 47 angeschlossen. Der Fluidstromerzeuger 60 kann zum Trocknen der Gehäuseinnenwand und der Förderschneckenwellen 41, 42 genutzt werden und ist somit Teil der Trocknungseinrichtung 56.

Die Aufbereitungsanlage 1 umfasst zum Einstellen eines Betriebsmodus und eines Reinigungsmodus eine Steuereinrichtung 61. Die Steuereinrichtung 61 ist in Signalverbindung mit den Antriebsmotoren 17, 44, der Dosiereinrichtung 49, der Trocknungseinrichtung 56, der Gehäuseheizung 57 und dem Fluidstromerzeuger 60.

Nachfolgend ist die Funktionsweise der Aufbereitungsanlage 1 beschrieben:
In dem Betriebsmodus wird das aufzubereitendes Material bzw. die Pulverlackvormischung 2 mittels der Dosiereinrichtung 49 über den Einlauftrichter 47 und die Zuführöffnung 48 der Beschickungs-Schneckenmaschine 28 zugeführt. Die Beschickungs-Schneckenmaschine 28 fördert das Material in der Förderrichtung 50 zu der Beschickungsöffnung 51. Der Antriebsmotor 44 treibt die Förderschneckenwellen 41, 42 in der ersten Drehrichtung Di an. Das Material wird über die Beschickungsöffnung 51 und die Materialzuführöffnung 27 in die Gehäusebohrungen 13, 14 der Aufbereitungs-Schneckenmaschine 4 zugeführt.

In der Aufbereitungs-Schneckenmaschine 4 wird das Material in der Aufbereitungsrichtung 22 von der Einzugszone 23 in die Plastifizierzone 24 gefördert und dort plastifiziert bzw. aufgeschmolzen. Die hierdurch erzeugte Pulverlackschmelze 3 wird zu der Homogenisierungszone 25 gefördert und dort homogenisiert. In der Austragszone 26 wird die Pulverlackschmelze 3 durch die Austragsöffnung 37 ausgetragen und anschließend in üblicher Weise weiterverarbeitet.

Bei einer Störung, beispielsweise einer unerwünschten Qualitätsabweichung, oder einem Wechsel des Materials bzw. der Pulverlackvormischung 2 muss die Aufbereitungsanlage 1 entleert und gereinigt werden. Hierzu wird mittels der Steuereinrichtung 61 der Reinigungsmodus eingestellt. Im Reinigungsmodus können die Aufbereitungs-Schneckenmaschine 4 und die Beschickungs-Schneckenmaschine 28 unabhängig voneinander entleert und gegebenenfalls gereinigt werden. Das Entleeren und Reinigen der Aufbereitungs-Schneckenmaschine 4 erfolgt in üblicher Weise.

Die Beschickungs-Schneckenmaschine 28 wird unabhängig von der Aufbereitungs-Schneckenmaschine 4 entleert. Hierzu wird die Entleeröffnung 52 durch Verlagern des Verschlusselements 53 geöffnet. Der Antriebsmotor 44 treibt die Förderschneckenwellen 41, 42 in der zweiten Drehrichtung D₂ an, so dass diese in der Entleerrichtung 54 fördern. Das in den Gehäusebohrungen 39, 40 befindliche Material wird in der Entleerrichtung 54 zu der Entleeröffnung 52 gefördert und dort aus dem Gehäuse 38 bzw. den Gehäusebohrungen 39, 40 durch die Entleeröffnung 52 ausgetragen. Ein Entleeren der Beschickungs-Schneckenmaschine 28 über die Aufbereitungs-Schneckenmaschine 4 ist somit nicht erforderlich.

Zum Reinigen der Beschickungs-Schneckenmaschine 28 werden zunächst der Einlauftrichter 47 und die Zuführöffnung 48 mittels des Fluidstromerzeugers 60 ausgeblasen. Der Fluidstrom bzw. das Druckgas kann über die Entleeröffnung 52 und/oder die Hilfsöffnung 55 entweichen. Zur Reinigung der Gehäuseinnenwand und der Förderschneckenwellen 41, 42 wird die Entleeröffnung 52 mittels des Verschlusselements 53 verschlossen. Anschließend wird ein Reinigungsmittel R durch die Hilfsöffnung 55 in die Gehäusebohrungen 39, 40 zugeführt. Das Reinigungsmittel R ist beispielsweise ausgewählt aus einer Reinigungsflüssigkeit, beispielsweise Wasser oder einem Harz, und einem Reinigungsgranulat, beispielsweise einem Gummigranulat, einem PP-Granulat oder einem PE-Granulat.

Zur Reinigung wird die Drehrichtung Di bzw. D₂ der Förderschneckenwellen 41, 42 alternierend gewechselt, so dass die Förderschneckenwellen 41, 42 alternierend in der Förderrichtung 50 und der Entleerrichtung 54 fördern. Das Reinigungsmittel R wird somit zwischen der Hilfsöffnung 55 bzw. der Entleeröffnung 52 und der Beschickungsöffnung 51 abwechselnd in der Förderrichtung 50 und der Entleerrichtung 54 gefördert. Hierdurch erfolgt eine intensive Reinigung der Gehäuseinnenwand und der Förderschneckenwellen 41, 42. Nach der Reinigung werden das Reinigungsmittel R und abgereinigte Verschmutzungen durch die Entleeröffnung 52 entleert.

Nach einer erfolgten Nass-Reinigung werden die Gehäuseinnenwand und die Förderschneckenwellen 41, 42 mittels der Trocknungseinrichtung 56 getrocknet. Hierzu wird die Gehäuseheizung 57 eingeschaltet, so dass die elektrischen Heizelemente 58 das Gehäuse 38 und die darin ausgebildeten Gehäusebohrungen 39, 40 beheizen. Durch das Beheizen werden die Gehäuseinnenwand und die Förderschneckenwellen 41, 42 getrocknet. Das Trocknen wird durch den Fluidstromerzeuger 60 unterstützt, der einen Fluidstrom in den Gehäusebohrungen 39, 40 erzeugt. Der Fluidstrom bzw. das Druckgas strömt über die Zuführöffnung 48 in die Gehäusebohrungen 39, 40 und von dort zu der Beschickungsöffnung 51 und der Hilfsöffnung 55 sowie der Entleeröffnung 52. Nach dem Trocknen ist die Beschickungs-Schneckenmaschine 28 wieder einsatzbereit.

Die Beschickungs-Schneckenmaschine 28 ermöglicht somit eine einfache, schnelle und zuverlässige Reinigung und ermöglicht eine einfache und schnelle Wiederinbetriebnahme der Aufbereitungsanlage 1 nach einer Störung oder einem Materialwechsel.

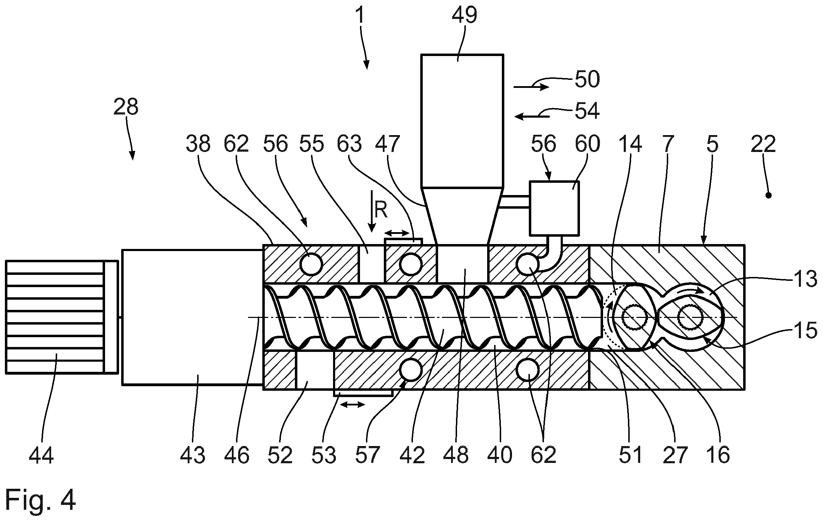

Nachfolgend ist anhand von Fig. 4 ein zweites Ausführungsbeispiel der Erfindung beschrieben. Im Unterschied zu dem ersten Ausführungsbeispiel weist die Gehäuseheizung 57 einen Fluidkanal 62 auf, der in dem Gehäuse 38 ausgebildet ist. Zum Beheizen des Gehäuses 38 wird mittels des Fluidstromerzeugers 60 ein erhitzter Fluidstrom in dem Fluidkanal 62 und in den Gehäusebohrungen 39, 40 erzeugt. Hierzu umfasst der Fluidstromerzeuger eine Fluidheizung zum Bereitstellen eines erhitzten Fluids bzw. eines Heizfluids. Hinsichtlich des weiteren Aufbaus der Aufbereitungsanlage 1 und der weiteren Funktionsweise wird auf das vorangegangene Ausführungsbeispiel verwiesen.

### Allgemein gilt:

Die Beschickungs-Schneckenmaschine 28 kann zum Beschicken eines beliebigen Materials eingesetzt werden. Die Entleeröffnung 52 kann in der Förderrichtung 50 betrachtet an einer beliebigen Stelle in dem Gehäuse 38 ausgebildet sein. Vorzugsweise ist die Entleeröffnung 52 an einer Unterseite des Gehäuses 38 ausgebildet, so dass ein Entleeren des Materials aufgrund der wirkenden Gravitationskraft möglich ist. An die Entleeröffnung 52 und/oder die Hilfsöffnung 55 kann eine Absaugung angeschlossen werden. Die Hilfsöffnung 55 kann an einer beliebigen Stelle in dem Gehäuse 38 ausgebildet sein. Es können mehrere Entleeröffnungen 52 und/oder mehrere Hilfsöffnungen 55 in dem Gehäuse 38 ausgebildet sein. Das Reinigungsmittel R kann mittels Düsen zugeführt werden.

## Patentansprüche

1. Beschickungs-Schneckenmaschine zum Beschicken einer Aufbereitungs-Schneckenmaschine mit
- einem Gehäuse (38),
- mindestens einer in dem Gehäuse (38) ausgebildeten Gehäusebohrung (39, 40),
- einer in dem Gehäuse (38) ausgebildeten Zuführöffnung (48) zum Zuführen von Material in die mindestens eine Gehäusebohrung (39, 40),
- einer in dem Gehäuse (38) ausgebildeten Beschickungsöffnung (51) zum Beschicken einer Aufbereitungs-Schneckenmaschine (4) mit dem Material,
- mindestens einer in der mindestens einen Gehäusebohrung (39, 40) drehbar angeordneten Förderschneckenwelle (41, 42) zum Fördern des Materials in einer Förderrichtung (50) von der Zuführöffnung (48) zu der Beschickungsöffnung (51), und
- einer in dem Gehäuse (38) ausgebildeten Entleeröffnung (52) zum Abführen von in der Beschickungs-Schneckenmaschine (28) befindlichem Material und zum Entleeren der Beschickungs-Schneckenmaschine (28) in einem Reinigungsmodus,
**dadurch gekennzeichnet,**
**dass** die Entleeröffnung (52) in der Förderrichtung (50) stromaufwärts zu der Zuführöffnung (48) angeordnet ist.

2. Beschickungs-Schneckenmaschine nach Anspruch 1, **dadurch gekennzeichnet,**
**dass** die Entleeröffnung (52) in der Förderrichtung (50) stromaufwärts zu der Beschickungsöffnung (51) angeordnet ist.

3. Beschickungs-Schneckenmaschine nach mindestens einem der vorangegangenen Ansprüche, **dadurch gekennzeichnet,**
**dass** die Entleeröffnung (52) an einer Unterseite des Gehäuses (38) ausgebildet ist.

4. Beschickungs-Schneckenmaschine nach mindestens einem der vorangegangenen Ansprüche, **gekennzeichnet**
**durch** ein Verschlusselement (53) zum Öffnen und Verschließen der Entleeröffnung (52).

5. Beschickungs-Schneckenmaschine nach mindestens einem der vorangegangenen Ansprüche, **gekennzeichnet**
**durch** einen Antriebsmotor (44) zum Drehantreiben der mindestens einen Förderschneckenwelle (41, 42) in einer ersten Drehrichtung (D₁) und in einer entgegengesetzten zweiten Drehrichtung (D₂).

6. Beschickungs-Schneckenmaschine nach mindestens einem der vorangegangenen Ansprüche, **dadurch gekennzeichnet,**
**dass** mindestens eine Hilfsöffnung (55) zum Reinigen und/oder Trocknen in dem Gehäuse (38) ausgebildet ist.

7. Beschickungs-Schneckenmaschine nach mindestens einem der vorangegangenen Ansprüche, **gekennzeichnet**
**durch** eine Trocknungseinrichtung (56) zum Trocknen des Gehäuses (38) und/oder der mindestens einen Förderschneckenwelle (41, 42).

8. Beschickungs-Schneckenmaschine nach Anspruch 7, **dadurch gekennzeichnet,**
**dass** die Trocknungseinrichtung (56) eine Gehäuseheizung (57) umfasst.

9. Beschickungs-Schneckenmaschine nach mindestens einem der vorangegangenen Ansprüche, **gekennzeichnet**
**durch** einen Fluidstromerzeuger (60) zum Reinigen und/oder Trocknen.

10. Aufbereitungsanlage mit
- einer Aufbereitungs-Schneckenmaschine (4) zum Aufbereiten von Material, und
- einer Beschickungs-Schneckenmaschine (28) zum Beschicken der Aufbereitungs-Schneckenmaschine (4) nach mindestens einem der Ansprüche 1 bis 9.

11. Aufbereitungsanlage nach Anspruch 10, **gekennzeichnet durch** eine Steuereinrichtung (61) zum Einstellen eines Betriebsmodus und eines Reinigungsmodus.

12. Verfahren zum Betreiben einer Aufbereitungsanlage, umfassend folgende Schritte:
- Bereitstellen einer Aufbereitungsanlage (1) nach Anspruch 10 oder 11, und
- Betreiben der Aufbereitungsanlage (1) in einem Reinigungsmodus, wobei in dem Reinigungsmodus in der Beschickungs-Schneckenmaschine (28) befindliches Material durch die Entleeröffnung (52) abgeführt und die Beschickungs-Schneckenmaschine (28) entleert wird.

13. Verfahren nach Anspruch 12, **dadurch gekennzeichnet,**
**dass** in dem Reinigungsmodus zumindest zeitweise eine Drehrichtung (D₂) der mindestens einen Förderschneckenwelle (41, 42) umgekehrt zu einem Betriebsmodus ist.

14. Verfahren nach Anspruch 12 oder 13, **dadurch gekennzeichnet,**
**dass** der Reinigungsmodus ein Trocknen des Gehäuses (38) und/oder der mindestens einen Förderschneckenwelle (41, 42) umfasst.

## Claims

1. A feeding screw machine for feeding a processing screw machine with
- a housing (38),
- at least one housing bore (39, 40) formed in the housing (38),
- a supply opening (48) formed in the housing (38) for supplying material into the at least one housing bore (39, 40),
- a feeding opening (51) formed in the housing (38) for feeding the material to a processing screw machine (4),
- at least one screw conveyor shaft (41, 42) rotatably arranged in the at least one housing bore (39, 40), for conveying the material in a conveying direction (50) from the supply opening (48) to the feeding opening (51), and
- an emptying opening (52) formed in the housing (38) for discharging material that is located in the feeding screw machine (28) and for emptying the feeding screw machine (28) in a cleaning mode,
**characterized in that**
the emptying opening (52) is arranged upstream of the supply opening (48) in the conveying direction (50).

2. A feeding screw machine according to claim 1, **characterized in that** the emptying opening (52) is arranged upstream of the feeding opening (51) in the conveying direction (50).

3. A feeding screw machine according to at least one of the preceding claims, **characterized in that**
the emptying opening (52) is formed on an underside of the housing (38).

4. A feeding screw machine according to at least one of the preceding claims, **characterized by**
a closure element (53) for opening and closing the emptying opening (52).

5. A feeding screw machine according to at least one of the preceding claims, **characterized by**
a drive motor (44) for driving the at least one screw conveyor shaft (41, 42) in rotation in a first direction of rotation (D₁) and in an opposite second direction of rotation (D₂).

6. A feeding screw machine according to at least one of the preceding claims, **characterized in that**
at least one auxiliary opening (55) for cleaning and/or drying is formed in the housing (38).

7. A feeding screw machine according to at least one of the preceding claims, **characterized by**
a drying device (56) for drying the housing (38) and/or the at least one screw conveyor shaft (41, 42).

8. A feeding screw machine according to claim 7, **characterized in that** the drying device (56) comprises a housing heater (57).

9. A feeding screw machine according to at least one of the preceding claims, **characterized by**
a fluid flow generator (60) for cleaning and/or drying.

10. A processing installation with
- a processing screw machine (4) for processing material, and
- a feeding screw machine (28) for feeding the processing screw machine (4) according to at least one of claims 1 to 9.

11. A processing installation according to claim 10, **characterized by** a control device (61) for setting an operating mode and a cleaning mode.

12. A method for operating a processing installation, comprising the following steps:
- providing a processing installation (1) according to claim 10 or 11, and
- operating the processing installation (1) in a cleaning mode, wherein in the cleaning mode material present in the feeding screw machine (28) is discharged through the emptying opening (52), and the feeding screw machine (28) is emptied.

13. A method according to claim 12, **characterized in that** in the cleaning mode, at least at times a direction of rotation (D₂) of the at least one screw conveyor shaft (41, 42) is reversed with respect to an operating mode.

14. A method according to claim 12 or 13, **characterized in that** the cleaning mode comprises a drying of the housing (38) and/or the at least one screw conveyor shaft (41, 42).

## Revendications

1. Machine à vis de chargement pour charger une machine à vis de traitement avec
- un boîtier (38),
- au moins un alésage de boîtier (39, 40) formé dans le boîtier (38),
- une ouverture d'alimentation (48) formée dans le boîtier (38) pour alimenter le matériau dans ledit au moins un alésage de boîtier (39, 40),
- une ouverture de chargement (51) formée dans le boîtier (38) pour charger une machine à vis de traitement (4) avec le matériau,
- au moins un arbre de vis de transport (41, 42) disposé de manière rotative dans ledit au moins un alésage de boîtier (39, 40) pour transporter le matériau dans une direction de transport (50) depuis l'ouverture d'alimentation (48) vers l'ouverture de chargement (51), et
- une ouverture de vidage (52) formée dans le boîtier (38) pour évacuer le matériau se trouvant dans la machine à vis de chargement (28) et pour vider la machine à vis de chargement (28) dans un mode de nettoyage,
**caractérisée en ce**
**que** l'ouverture de vidage (52) est disposée en amont de l'ouverture d'alimentation (48) dans la direction de transport (50).

2. Machine à vis de chargement selon la revendication 1, **caractérisée en en ce que** l'ouverture de vidage (52) est disposée en amont de l'ouverture de chargement (51) dans la direction de transport (50).

3. Machine à vis de chargement selon au moins l'une des revendications précédentes, **caractérisée en ce**
**que** l'ouverture de vidage (52) est formée sur une face inférieure du boîtier (38).

4. Machine à vis de chargement selon au moins l'une des revendications précédentes, **caractérisée**
**par** un élément de fermeture (53) pour ouvrir et fermer l'ouverture de vidage (52).

5. Machine à vis de chargement selon au moins l'une des revendications précédentes, **caractérisée**
**par** un moteur d'entraînement (44) pour entraîner en rotation ledit au moins un arbre de vis de transport (41, 42) dans un premier sens de rotation (D₁) et dans un deuxième sens de rotation opposé (D₂).

6. Machine à vis de chargement selon au moins l'une des revendications précédentes, **caractérisée en ce**
**qu**'au moins une ouverture auxiliaire (55) pour le nettoyage et/ou le séchage est formée dans le boîtier (38).

7. Machine à vis de chargement selon au moins l'une des revendications précédentes, **caractérisée**
**par** un dispositif de séchage (56) pour sécher le boîtier (38) et/ou ledit au moins un arbre de vis de transport (41, 42).

8. Machine à vis de chargement selon la revendication 7, **caractérisée en ce que** le dispositif de séchage (56) comprend un chauffage de boîtier (57).

9. Machine à vis de chargement selon au moins l'une des revendications précédentes, **caractérisée**
**par** un générateur de flux de fluide (60) pour le nettoyage et/ou le séchage.

10. Installation de traitement avec
- une machine à vis de traitement (4) pour le traitement de matériau, et
- une machine à vis de chargement (28) pour charger la machine à vis de traitement (4) selon au moins l'une des revendications 1 à 9.

11. Installation de traitement selon la revendication 10, **caractérisée par** un dispositif de commande (61) pour régler un mode de fonctionnement et un mode de nettoyage.

12. Procédé pour faire fonctionner une installation de traitement, comprenant les étapes suivantes :
- mise à disposition d'une installation de traitement (1) selon la revendication 10 ou 11, et
- faire fonctionner l'installation de traitement (1) dans un mode de nettoyage, dans lequel, dans le mode de nettoyage, le matériau se trouvant dans la machine à vis de chargement (28) est évacué par l'ouverture de vidage (52) et la machine à vis de chargement (28) est vidée.

13. Procédé selon la revendication 12, **caractérisé en ce que**, dans le mode de nettoyage, un sens de rotation (D₂) de l'au moins un arbre de vis de transport (41, 42) est au moins temporairement inversé par rapport à un mode de fonctionnement.

14. Procédé selon la revendication 12 ou 13, **caractérisé en ce que** le mode de nettoyage comprend un séchage du boîtier (38) et/ou de l'au moins un arbre de vis de transport (41, 42).
